(19) Europäisches Patentamt
European Patent Office
Office européen des brevets

(11) Veröffentlichungsnummer: **0 425 429 B1**

(12) **EUROPÄISCHE PATENTSCHRIFT**

(45) Veröffentlichungstag der Patentschrift: **22.02.95**

(51) Int. Cl.[6]: **C09D 11/00**, C08K 5/42, D21H 17/09, B41M 5/00

(21) Anmeldenummer: **90810616.4**

(22) Anmeldetag: **16.08.90**

(54) **Lichtstabilisierte Tinten.**

(30) Priorität: **25.08.89 CH 3084/89**

(43) Veröffentlichungstag der Anmeldung: **02.05.91 Patentblatt 91/18**

(45) Bekanntmachung des Hinweises auf die Patenterteilung: **22.02.95 Patentblatt 95/08**

(84) Benannte Vertragsstaaten: **DE FR GB IT**

(56) Entgegenhaltungen:
**EP-A- 0 165 608**
**EP-A- 0 374 751**
**US-A- 3 444 164**

(73) Patentinhaber: **CIBA-GEIGY AG**
**Klybeckstrasse 141**
**CH-4002 Basel (CH)**

(72) Erfinder: **Laver, Hugh Stephen, Dr.**
**Route de Schiffenen 12**
**CH-1700 Fribourg (CH)**

EP 0 425 429 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wässrige Tinten, die als Lichtschutzmittel ein wasserlösliches Derivat eines 2-Hydroxyphenyl-s-triazins enthalten. Diese Tinten sind vor allem für den Tintenstrahldruck geeignet.

Das Drucken mittels Tintenstrahl ist ein sehr schnelles Druckverfahren, das durch elektrische Signale gesteuert wird. Dabei wird ein feiner Strahl von Tintentröpfchen durch eine Düse auf das Aufzeichnungsmaterial gespritzt. Als Tinte verwendet man vorzugsweise eine wässrige Lösung eines wasserlöslichen Farbstoffes. Diese Farbstoffe haben generell eine geringere Lichtechtheit als die in konventionellen Druckverfahren verwendeten Farb-Pigmente. Als Folge davon sind im Tintenstrahldruck hergestellte Aufzeichnungen unter Lichtzutritt nur beschrankt lagerfähig.

Man hat daher bereits vorgeschlagen (US-A-4,256,493), der Tinte einen wasserlöslichen UV-Absorber vom Typ sulfonierter Hydroxybenzophenone zuzusetzen. Auch die Metallsalze solcher Verbindungen wurden als Lichtschutz-Additive für Tinten für den Tintenstrahldruck vorgeschlagen (JP-A-46277/88).

Solche Benzophenonderivate und deren Salze haben den Nachteil, dass sie mit bestimmten Farbstoffen, vor allem mit schwarzen Farbstoffen, Verfärbungen verursachen. Weiterhin zeigen die Benzophenonderivate gelegentlich negative Effekte auf die Lichtechtheit der Tintenfarbstoffe, beispielsweise mit dem Farbstoff C.I. Acid Yellow 23.

In Research Disclosure 22519 wurden auch schon Carbonsäurederivate von UV-Absorbern vom Benztriazol-Typ zur Stabilisierung von Farbstoffen und Tinten vorgeschlagen. Diese Derivate sind in wässrigen Systemen jedoch nicht genügend löslich.

Es wurde nunmehr gefunden, dass sich bestimmte wasserlösliche Derivate von 2-Hydroxyphenyl-s-triazinen gut als Lichtschutz-Additive für wässrige Tinten, insbesondere Tinten für den Tintenstrahldruck sowie für Aufzeichnungsmaterialien, die mit den wässrigen Tinten beschriftet oder bedruckt werden.

Die Erfindung betrifft wässrige Tinten, die als Lichtschutzmittel mindestens eine Verbindung der Formel I enthalten,

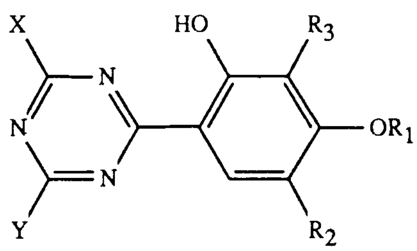

I

worin $R_1$ Wasserstoff, $C_1$-$C_4$-Alkyl, eine Gruppe $-R_4-SO_3M$ oder $-R_4-CO_2M$ bedeutet,
$R_2$, wenn $R_1$ H oder $C_1$-$C_4$-Alkyl ist, eine Gruppe $-SO_3M$ bedeutet, und wenn $R_1$ $-R_4-CO_2M$ oder $-R_4-SO_3M$ ist, H oder $-SO_3M$ bedeutet,
$R_3$ Wasserstoff, Cl oder $C_1$-$C_4$-Alkyl bedeutet,
$R_4$ unsubstituiertes oder durch OH substituiertes $C_1$-$C_4$-Alkylen bedeutet,
X und Y unabhängig voneinander eine Gruppe der Formel II oder III bedeuten,

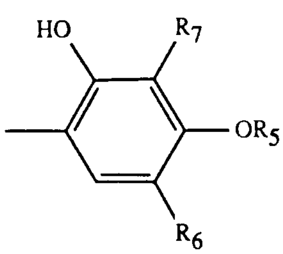

II

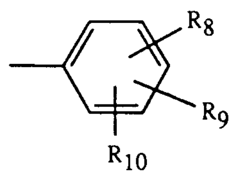

III

worin $R_5$ Wasserstoff, $C_1$-$C_4$-Alkyl, $-R_4-CO_2M$ oder $-R_4-SO_3M$ bedeutet,
$R_6$ Wasserstoff, Cl, $C_1$-$C_4$-Alkyl oder $-SO_3M$ bedeutet,
$R_7$ Wasserstoff, Cl oder $C_1$-$C_4$-Alkyl bedeutet,
$R_8$, $R_9$ und $R_{10}$ unabhängig voneinander H, Cl, $C_1$-$C_4$-Alkyl, Phenyl oder $-SO_3M$ bedeuten und

M Wasserstoff, Li, Na, K, $\frac{1}{2}$ Ca, $\frac{1}{2}$ Mg, $\frac{1}{2}$ Zn, $\frac{1}{2}$ Co(II), $\frac{1}{2}$ Cu(II), $\frac{1}{2}$ Ni(II), $\frac{1}{3}$ Cr(III), $\frac{1}{3}$ Fe(III),

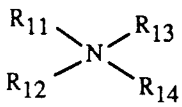
,
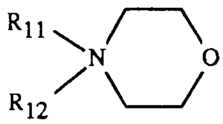
oder $\frac{1}{2}$
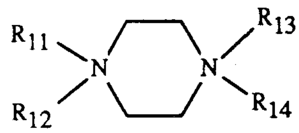

bedeutet, worin
$R_{11}$, $R_{12}$, $R_{13}$ und $R_{14}$ unabhängig voneinander H, $C_1$-$C_{12}$-Alkyl, 2-Hydroxyethyl, Cyclohexyl, Phenyl oder Benzyl bedeuten.

Wenn in Formel I ein Substituent $C_1$-$C_4$-Alkyl ist so kann dies z.B. Methyl, Ethyl, n-Propyl, i-Propyl, n-Propyl, n-Butyl, i-Butyl, s-Butyl oder t-Butyl sein. $R_4$ als unsubstituiertes oder durch OH substituiertes $C_1$-$C_4$-Alkylen kann z.B. Methylen, 1,2-Ethylen, 1,3-Propylen, 2-Hydroxy-1,3-propylen oder 1,4-Butylen sein.

Bevorzugt sind Tinten, enthaltend mindestens eine Verbindung der Formel I, worin entweder
a) $R_1$ Wasserstoff, Methyl oder Ethyl ist und $R_2$ -$SO_3M$ bedeutet, oder
b) $R_1$ -$R_4$-$SO_3M$ oder -$R_4$-$CO_2M$ bedeutet und $R_2$ Wasserstoff ist,
$R_3$ Wasserstoff, Cl oder Methyl bedeutet,
$R_4$ unsubstituiertes oder durch OH substituiertes $C_1$-$C_3$-Alkylen bedeutet,
X und Y unabhängig voneinander eine Gruppe der Formel II oder III bedeuten, worin
$R_5$ Wassertoff, Methyl, Ethyl, -$R_4$-$CO_2M$ oder -$R_4$-$SO_3M$ bedeutet,
$R_6$ Wasserstoff oder -$SO_3M$ bedeutet,
$R_7$ Wasserstoff, Cl oder Methyl bedeutet,
$R_8$ Wasserstoff ist,
$R_9$ und $R_{10}$ unabhängig voneinander H, Cl, Methyl, Ethyl oder -$SO_3M$ bedeuten,
M Wasserstoff, Li, Na, K, $\frac{1}{2}$ Ni(II) oder

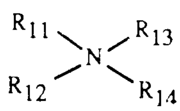

bedeutet und $R_{11}$, $R_{12}$, $R_{13}$ und $R_{14}$ unabhängig voneinander H, Methyl, Ethyl oder 2-Hydroxyethyl bedeuten.

Besonders bevorzugt sind Tinten, enthaltend mindestens eine Verbindung der Formel I, worin entweder
a) $R_1$ Wasserstoff oder Methyl ist und $R_2$ -$SO_3M$ ist oder
b) $R_1$ -$R_4$-$SO_3M$ oder -$R_4$-$CO_2M$ ist und $R_2$ Wasserstoff ist,
$R_3$ Wasserstoff ist,
$R_4$ unsbustituiertes oder durch OH substituiertes $C_1$-$C_3$-Alkylen ist,
X und Y unabhängig voneinander eine Gruppe der Formel II oder III sind, worin $R_5$ dieselbe Bedeutung wie $R_1$ hat, $R_6$ dieselbe Bedeutung wie $R_2$ hat, $R_7$ Wasserstoff ist,
$R_8$ Wasserstoff ist, $R_9$ Wasserstoff oder Methyl ist und $R_{10}$ H, Methyl oder -$SO_3M$ bedeutet,
M Wasserstoff, Li, Na, K, $\frac{1}{2}$ Ni(II) oder

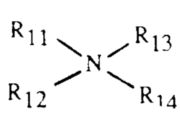

bedeutet und $R_{11}$, $R_{12}$, $R_{13}$ und
$R_{14}$ unabhängig voneinander H, Methyl, Ethyl oder 2-Hydroxyethyl bedeuten.

M ist insbesondere Lithium.

Beispiele für Verbindungen der Formel I sind die Verbindungen der folgenden Formeln:

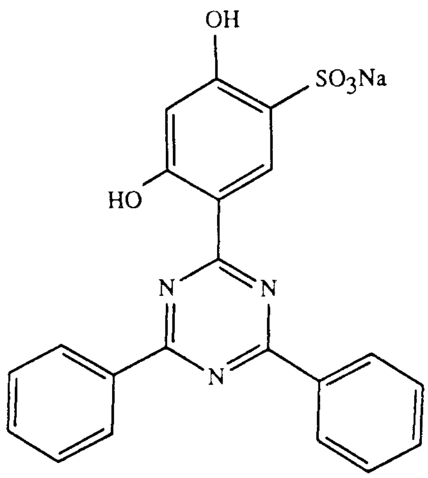

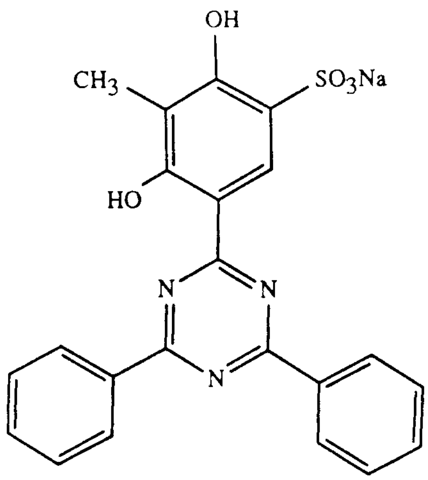

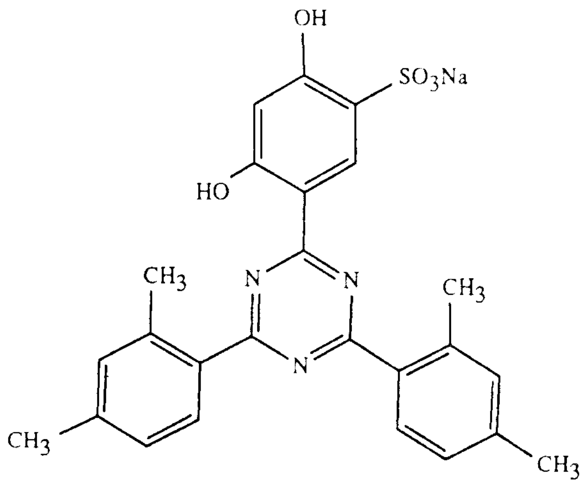

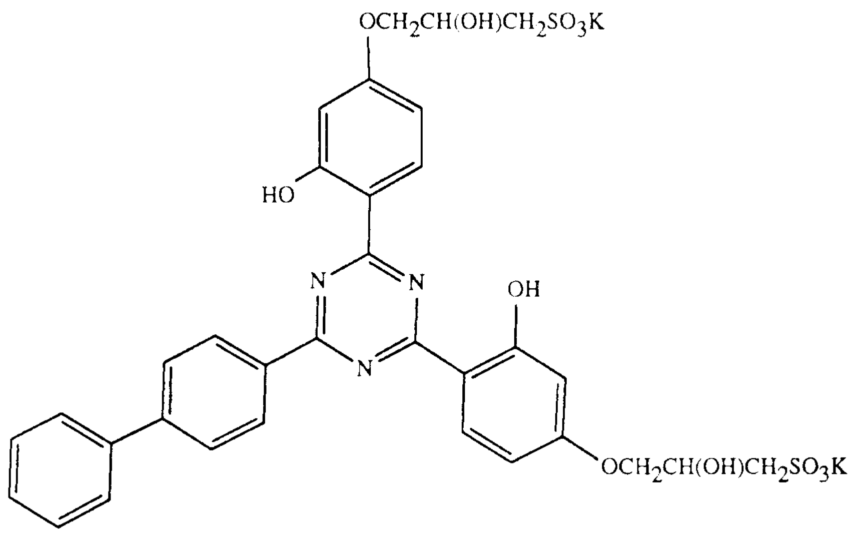

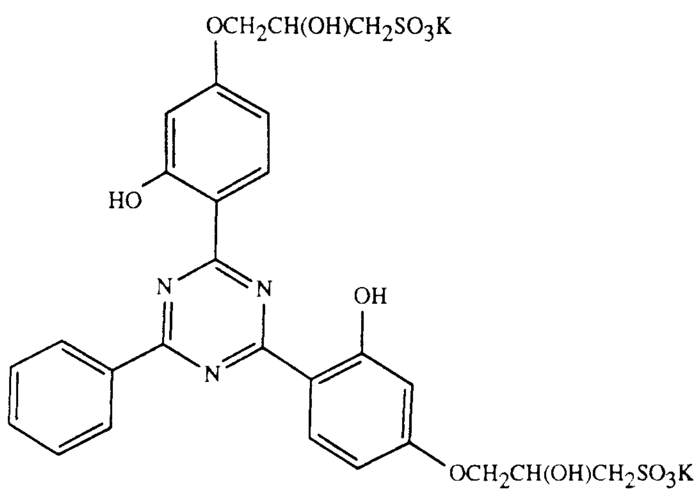

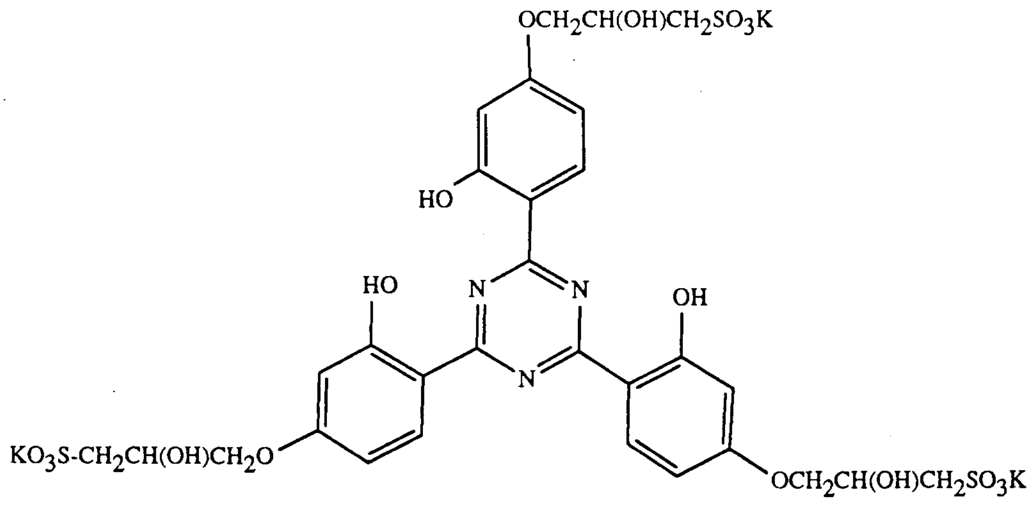

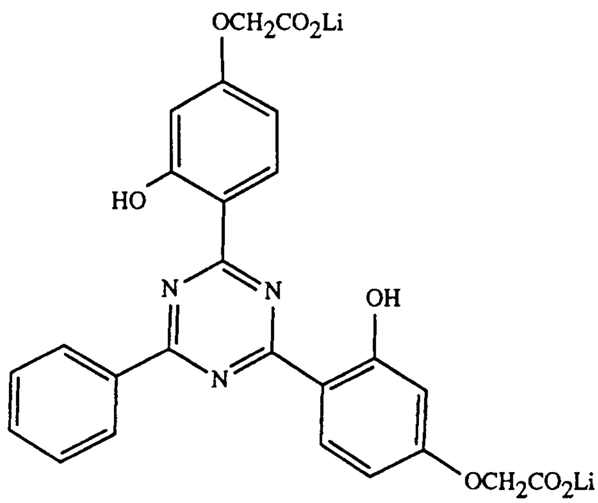

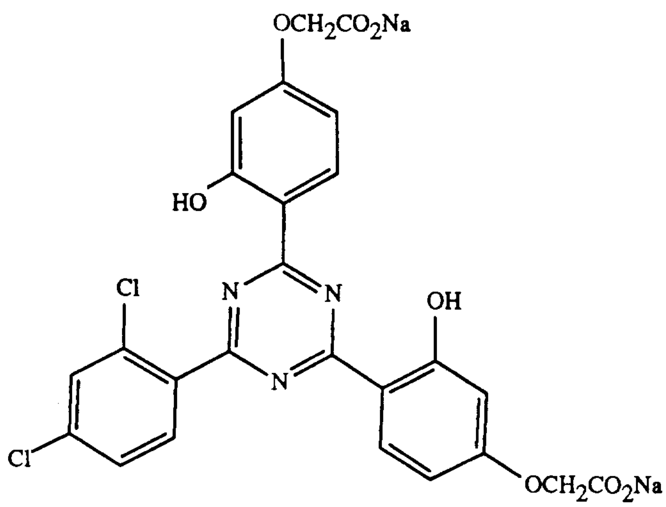

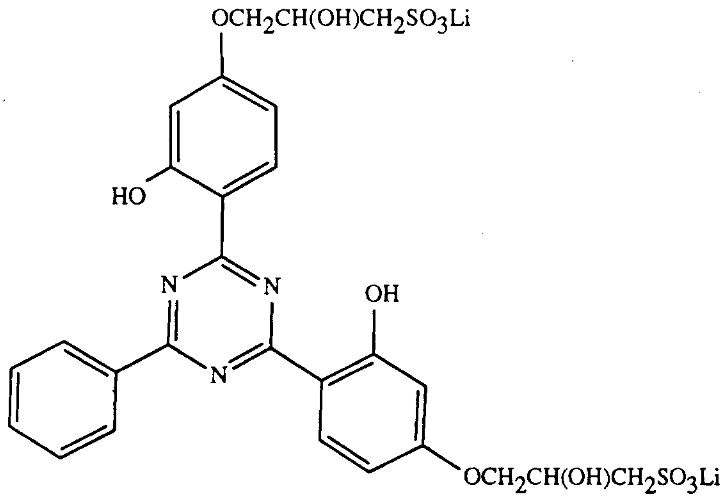

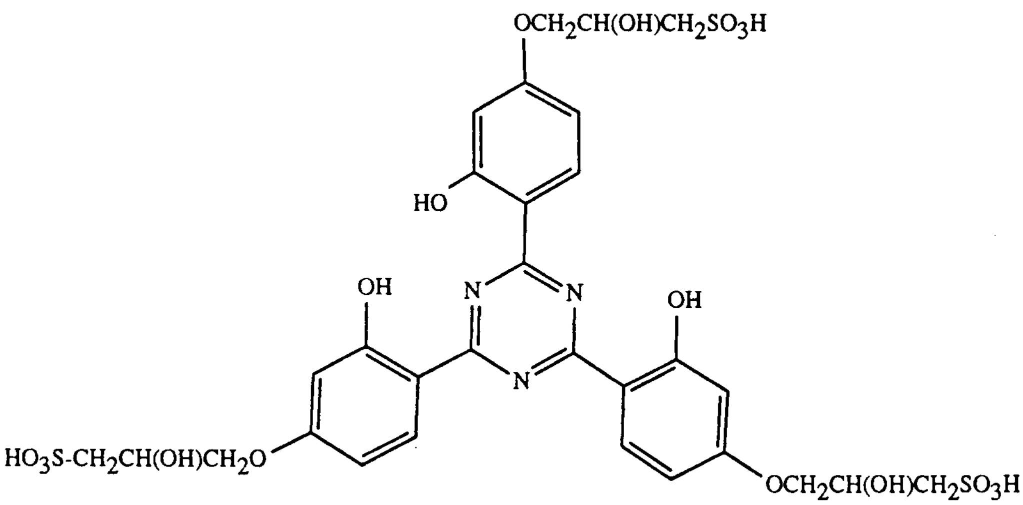

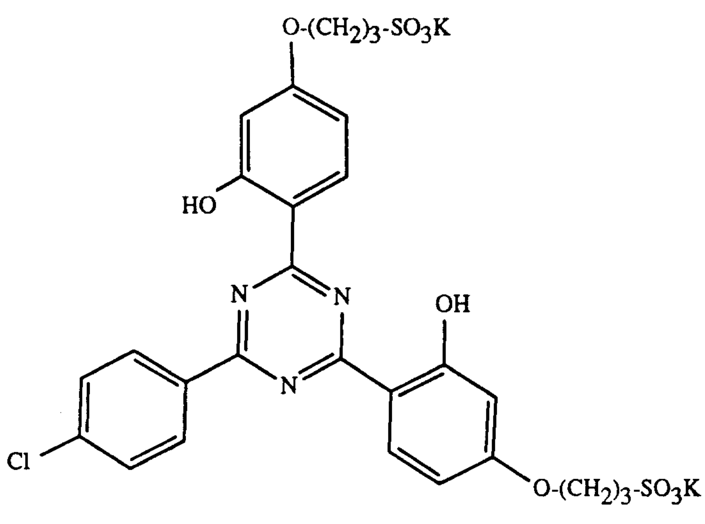

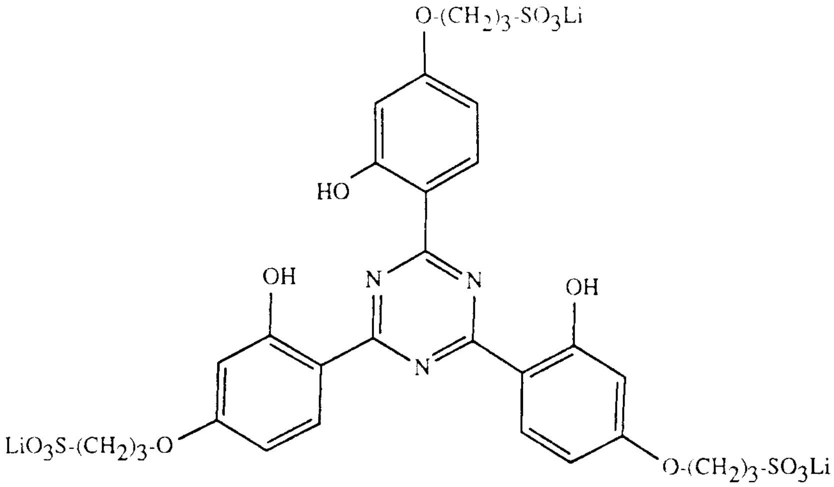

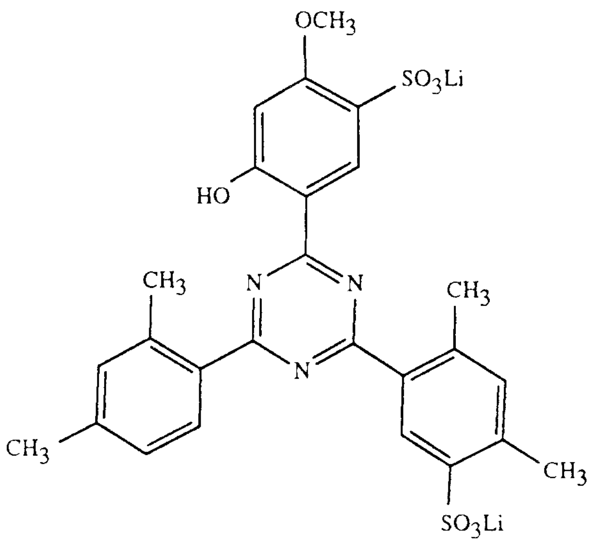

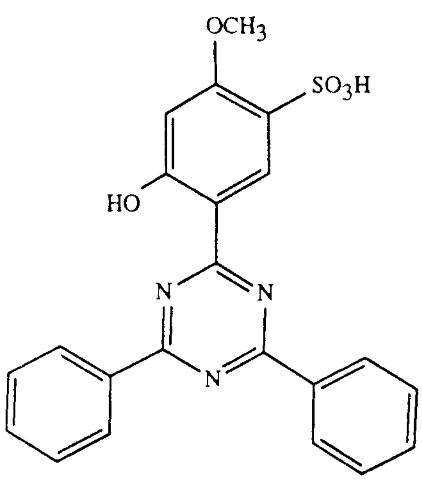

Soweit die Verbindungen der Formel I Salze sind, können sie aus den entsprechenden Säuren durch Neutralisation mit einer entsprechenden Base, z.B. einem Hydroxyd, Carbonat oder Oxid, hergestellt werden. Die entsprechenden Säuren sind bekannte Verbindungen oder können in analoger Weise zu den bekannten Verbindungen hergestellt werden, siehe FR-A-1 494 413, EP-A-165 608 und WO-A-86/3528.

Die freien Säuren sowie die Alkalisalze wurden als Lichtschutzmittel für photographische Farbstoffe sowie für Textilfarbstoffe vorgeschlagen.

Die Verbindungen der Formel I werden den Tinten vorzugsweise in einer Menge von 0,01 bis 20 Gew.-%, vorzugsweise von 0,1 bis 10 Gew.-%, zugesetzt. Sie sind in diesen Konzentrationen gut löslich.

Die Tinten sind wässrige Tinten. Sie enthalten mindestens 30 Gew.-% Wasser. Neben Wasser können sie (bis zu 70 Gew.-%) noch ein oder mehrere mit Wasser mischbare Lösungsmittel enthalten, wie z.B. Ethylenglykol, Di- oder Triethylenglykol, Propylenglykol oder Ether solcher Glykole, Butandiol-1,4, Thiodiglykol, Glycerin und dessen Ether, Polyglycerin, Mono-, Di- und Triethanolamin, Propanolamin, Dimethylformamid, Dimethylsulfoxid, Dimethylacetamid, N-Methylpyrrolidon, Methanol, Ethanol, Isopropanol, n-Propanol, Diacetonalkohol, Aceton, Methylethylketon oder Propylencarbonat.

Bevorzugt enthalten die Tinten mindestens 50 Gew.-% Wasser.

Die Tinten enthalten wasserlösliche Farbstoffe oder Mischungen von Farbstoffen, wie sie für das Färben von natürlichen Fasern bekannt sind. Dies können z.B. Mono-, Di- oder Polyazofarbstoffe sein, Triphenylmethanfarbstoffe, Reaktivfarbstoffe oder Phthalocyaninfarbstoffe. Beispiele für solche Farbstoffe sind die im Colour Index genannten Farbstoffe Acid Yellow 23, Direct Yellow 86, Acid Red 14, Acid Red 35, Acid Red 52, Acid Red 249, Direct Red 227, Reactive Red 40, Acid Blue 9, Direct Blue 86, Direct Blue 199, Food Black 2, Direct Black 19, Direct Black 38, Direct Black 168 und Sulphur Black 1. Im allgemeinen enthalten die Tinten 0,5-6 Gew.-% Farbstoff.

Die Tinten können auch verschiedene Zusätze in kleineren Mengen enthalten, wie z.B. Bindemittel, Tenside, Biocide, Korrosionsinhibitoren, Sequestriermittel, pH-Puffer oder Leitfähigkeitszusätze. Sie können auch weitere wasserlösliche Lichtschutzmittel enthalten. Im allgemeinen genügt jedoch die erfindungsgemässe Zugabe eines oder mehrerer Stabilisatoren der Formel I zur Tinte.

Die erfindungsgemäss stabilisierten Tinten werden bevorzugt für den Tintenstrahldruck verwendet. Sie können jedoch auch für alle sonstigen für Tinten üblichen Verwendungen eingesetzt werden, wie z.B. für Filzstifte, Stempelkissen, Füllfedern, Federschreiber (Pen Plotters), Farbbänder oder für verschiedene Druckverfahren als Druckfarben.

Beim Tintenstrahl-Druck gibt es verschiedene Verfahren in Abhängigkeit von der verwendeten Apparatur. So gibt es z.B. drop-on-demand printers, bubble-jet printers, continuous-jet printers oder compound-jet printers. Für alle diese apparativen Verfahren lassen sich die erfindungsgemäss stabilisierten Tinten verwenden.

Der Effekt des Zusatzes einer Verbindung der Formel I zu den Tinten besteht in der höheren Lichtbeständigkeit des mit der Tinte erzeugten Druckes. Die experimentelle Messung des Effektes kann durch Schnellbelichtung von Probedrucken in einem Belichtungsgerät geschehen, wie es in den weiter unten folgenden Beispielen gezeigt wird. Teile bedeuten darin Gewichtsteile und % bedeuten Gewichts-%.

Die erfindungsgemässen Aufzeichnungsmaterialien, die vorzugsweise für das Tintenstrahldruckverfahren verwendet werden, bestehen aus einem Träger mit einer durch Tintenstrahl bedruckbaren Oberfläche. Der Träger ist üblicherweise Papier oder eine Plastikfolie und normalerweise auf einer Seite mit einem Material beschichtet, das für Tinten aufnahmefähig ist. Vorzugsweise enthält diese Schicht $SiO_2$ und Polyvinylalkohol.

Unbeschichtetes Papier kann ebenfalls eingesetzt werden. Hier dient das Papier gleichzeitig als Trägermaterial und Tintenaufnahmeschicht. Ferner lassen sich auch Materialien aus Cellulosefasern und textile Fasermaterialien, beispielsweise Baumwollgewebe oder Baumwollmischgewebe aus Baumwolle und Polyacrylamid oder Polyester, welche Verbindungen der Formel (I) enthalten, für den Tintenstrahldruck verwenden.

Die Aufzeichnungsmaterialien können auch transparent sein, wie im Falle von Projektionsfolien.

Die Verbindungen der Formel I können auch in Aufzeichnungsmaterialien, insbesondere für den Tintenstrahldruck eingearbeitet werden.

In einer ersten Applikationsmethode können die Verbindungen der Formel I direkt dem Papierbrei bei der Papierherstellung zugesetzt werden.

Eine zweite Applikationsmethode ist das Besprühen des Trägermaterials mit einer Lösung der Verbindungen der Formel (I). Hierbei handelt es sich um eine wässrige Lösung oder eine Lösung in einem leicht flüchtigen organischen Lösungsmittel. Speziell im Falle öllöslicher Verbindungen der Formel (I) eignet sich das Aufsprühen von bzw. Tränken des Materials mit einer organischen Lösung einer Verbindung der Formel (I). Des weiteren bietet sich die Verwendung von Emulsionen bzw. Dispersionen an.

Meist wird jedoch eine farbstoffaffine Beschichtungsmasse auf das Trägermaterial aufgebracht, und in diesem Fall setzt man die Verbindungen der Formel (I) dieser Beschichtungsmasse zu. Die Beschichtungsmassen bestehen in der Regel aus einem festen Füllstoff, einem Bindermittel sowie üblichen Additiven.

Der Füllstoff ist mengenmässig der Hauptbestandteil der Beschichtungsmasse. Beispiele für Füllstoffe, die in Frage kommen, sind $SiO_2$, Kaolin, Talk, Ton, Ca-, Mg- oder Al-Silikate, Gips, Zeolith, Bentonit, Diatomenerde, Vemiculit, Stärke oder das in JP-A-60-260 377 beschriebene oberflächenmodifizierte $SiO_2$. Geringe Mengen an weissen Pigmenten, wie z.B. Titandioxid, Baryt, Magnesiumoxid, Kalk, Kreide oder Magnesiumcarbonat können mit dem Füllstoff in der Beschichtungsmasse verwendet werden, sofern sie die Dichte des Tintenstrahldrucks nicht stark herabsetzen.

Beschichtungsmassen, die für transparente, projektionsfähige Aufzeichnungsmaterialien bestimmt sind, können keine Licht streuende Teilchen, wie Pigmente und Füllstoffe, enthalten.

Das Bindemittel bindet die Füllstoffe unter sich und an das Trägermaterial. Beispiele für gebräuchliche Bindemittel sind wasserlösliche Polymere, wie z.B. Polyvinylalkohol, partiell hydrolysiertes Polyvinylacetat, Cellulose-ether, Polyvinylpyrrolidon und dessen Copolymere, Polyethylenoxid, Salze von Polyacrylsäure, Natrium-alginat, oxidierte Stärke, Gelatine, Casein, Pflanzengummi, Dextrin, Albumin, Dispersionen und Polyacrylaten oder Acrylat-Methacrylat-Copolymeren, Latices von Natur- oder Synthesekautschuk, Poly-(meth)acrylamid, Polyvinylether, Polyvinylester, Copolymere von Maleinsäure, Melaminharze, Harnstoffharze oder chemisch modifizierte Polyvinylalkohole, wie in JP-A-61-134 290 oder JP-A-61-134 291 beschrieben.

Man kann dem Bindemittel einen zusätzlichen Farbstoffrezeptor oder ein Beizmittel zusetzen, die die Fixierung des Farbstoffs an die Beschichtung verbessern. Farbstoffrezeptoren für saure Farbstoffe sind kationischer oder amphoterer Natur. Beispiele für kationische Rezeptoren sind polymere Ammoniumverbindungen wie z.B. Polyvinylbenzyl-trimethylammoniumchlorid, Polydiallyl-dimethylammoniumchlorid, Polymethacryloxyethyl-dimethylhydroxyethylammonium-chlorid, Polyvinylbenzyl-methylimidazolium-chlorid, Polyvinylbenzyl-picoliniumchlorid oder Polyvinylbenzyl-tributylammoniumchlorid. Weitere Beispiele sind basische Polymere wie z.B. Poly-(dimethylaminoethyl)methacrylat, Polyalkylenpolyamine und deren Kondensationsprodukte mit Dicyandiamid, Amin-Epichlorhydrin-Polykondensate oder die in den JP-A-57-36 692, 57-64 591, 57-187 289, 57-191 084, 58-177 390, 58-208 357, 59-20 696, 59-33 176, 59-96 987, 59-198 188, 60-49 990, 60-71 796, 60-72 785, 60-161 188, 60-187 582, 60-189 481, 60-189 482, 61-14 979, 61-43 593, 61-57 379, 61-57 380, 61-58 788, 61-61 887, 61-63 477, 61-72 581, 61-95 977, 61-134 291 oder in den US-A-4 547 405 und 4 554 181 sowie in der DE-A-3 417 582 beschriebenen Verbindungen. Ein Beispiel für amphotere Farbstoff-Rezeptoren ist Gelatine.

Die farbstoffaffine Beschichtung kann eine Reihe weiterer Additive enthalten, wie z.B. Antioxidantien, weitere Lichtschutzmittel (darunter auch UV-Absorber, die nicht den erfindungsgemässen Lichtschutzmittel entsprechen), Viskositätsverbesserer, optische Aufheller, Biocide und/oder Antistatika.

Beispiele für geeignete Antioxidantien sind insbesondere sterisch gehinderte Phenole und Hydrochinone, wie z.B. die in GB-A-2 088 777, oder den JP-A-60-72 785, 60-72 786 und 60-71 796 aufgeführten Antioxidantien.

Beispiele für geeignete Lichtschutzmittel sind insbesondere organische Nickelverbindungen und sterisch gehinderte Amine, wie z.B. die in den JP-A-58-152 072, 61-146 591, 61-163 886, 60-72 785 und 61-146 591 oder die in der GB-A-2 088 777, JP 59-169 883 und 61-177 279 erwähnten Lichtschutzmittel.

Geeignete UV-Absorber, die in Kombination mit Verbindungen der Formel (I) einer Beschichtungsmasse zugesetzt werden können, sind z.B. in Research Disclosure Nr. 24239 (1984) Seite 284, GB-A-2 088 777 und EP-A-0 280 650 beschrieben. Besonders die UV-Absorber der 2-Hydroxyphenylbenztriazol-Klasse und ganz besonders 2-(2'-Hydroxy-3',5'-di-t-amylphenyl)-benzotriazol und 2-(2'-Hydroxy-3'-t-butyl-5'-polyglykolpropionat-phenyl)-benztriazol sind für die Verwendung gemeinsam mit Verbindungen der Formel (I) in Aufzeichungsmaterialien für den Tintenstrahldruck geeignet. Die UV-Absorber können als Emulsion oder als Dispersion der Beschichtungsmasse zugegeben werden. Handelt es sich bei der Verbindung der Formel (I) um eine Säure, so kann diese durch Zugabe einer Lauge in der Beschichtungsmasse gelöst werden. Verbindungen der Formel (I), die keine Säuren sind; können entweder direkt in der Beschichtungsmasse gelöst werden oder ihr in Form einer Emulsion oder Suspension zugesetzt werden.

Die Beschichtungsmasse wird in der Regel auf den Träger, z.B. Papier, aufgetragen und durch Erhitzen getrocknet. Die Verbindungen der Formel (I) können, wie bereits erwähnt, auch in einem separaten Arbeitsgang, allein oder zusammen mit anderen, bereits beschriebenen Komponenten, als wässrige Lösung auf das Aufzeichnungsmaterial gebracht werden. Das Aufbringen kann durch Besprühen, Verleimen in einer Verleimungspresse, einem getrennten Giessvorgang oder durch Eintauchen in eine Wanne erfolgen. Nach einer solchen Nachbehandlung des Aufzeichnungsmaterials ist ein zusätzlicher Trocknungsvorgang nötig.

Das Aufzeichnungsmaterial enthält vorzugsweise 1 bis 10000 $mg/m^2$, insbesondere 50 bis 2000 $mg^2$, mindestens einer Verbindung der Formel (I).

Beispiel 1: Eine Beschichtungsmasse auf der Basis von Silika/Polyvinylalkohol wird aus den folgenden Komponenten hergestellt:

16,34 g einer 10%-igen Lösung von Polyvinylalkohol (Riedel de Haen GmbH)

0,02 g Di-tert-octylphenyl-polyethylenoxid
2,00 g Silika (Typ 244 W.R. Grace and Co.)
9,54 g Wasser

Die resultierende Beschichtungsmasse wird mit Hilfe von Ultraschall dispergiert und durch ein Sieb aus Polyesterfasern mit der Maschenweite 24 µm filtriert. Der pH wird durch Zusatz von 2N Natronlauge auf 7,0 eingestellt.

Die Beschichtungsmasse wird mit einer Drahtspirale auf photographisches Papier in einer Dicke von 36 µm aufgetragen. Nach dem Trocknen mit warmer Luft beträgt der Trockenauftrag der Beschichtung etwa 5,0 g/m$^2$.

Das Aufzeichnungsmaterial wird jeweils mit einer erfindungsgemässen Tinte, welche einen UV-Absorber der Formel I enthält und einer Vergleichstinte, die keinen UV-Absorber enthält, bedruckt.

Die Tinte dazu wird wie folgt hergestellt:

Man löst 6 g des UV-Absorbers in einer Mischung aus 80 g Wasser und 15 g Glycerin. Farbstoff-Lösungen werden bereitet aus 4 g C.I. Acid Yellow 23 oder C.I. Acid Red 35, 80 g Wasser und 15 g Glycerin. Beide Lösungen werden durch einen Ultrafilter mit 0,3 µm Porenweite filtriert und vereinigt. Die erhaltene Drucktinte besteht aus:

80 % Wasser
15 % Glycerin
2 % Farbstoff
3 % UV-Absorber

Die Blindprobe wird durch Vereinigung der Farbstofflösung mit gleichen Teilen eines Gemisches von 86 g Wasser und 15 g Glycerin bereitet.

Es wurden die folgenden UV-Absorber verwendet (hergestellt gemäss EP-A-165608):

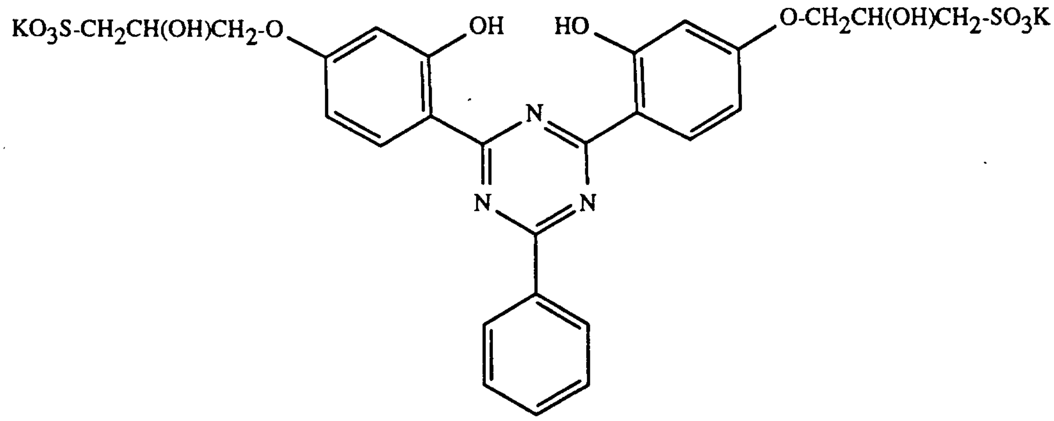

E-1

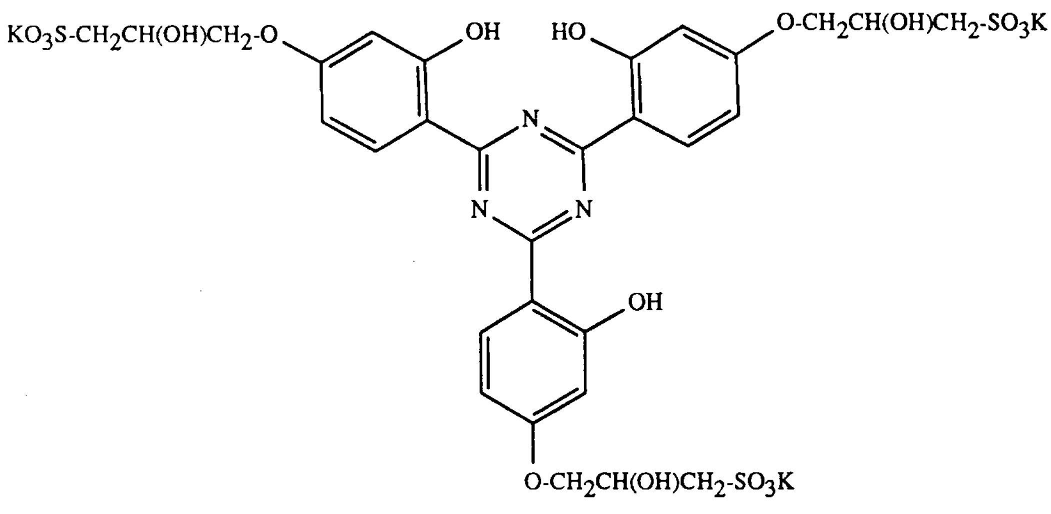

E-2

Die Tinten werden in Tintenpatronen der Tintenstrahldrucker "Think-Jet" der Fa. Hewlett Packard gefüllt. Es werden bedruckte Proben mit einer Punktdichte von 192x96 Punkte pro Inch (75,6x37,8 Punkte pro $cm^2$) hergestellt.

Nach einer Woche Lagerung, um den Druck völlig auszutrocknen, wird die Farbdichte (Intensität) der bedruckten Proben mit einem Densitometer (Macbeth TR 924) unter Verwendung eines Status A-Filters gemessen. Dann werden die Probedrucke in einem Atlas Weather-o-meter mit einer Xenonlampe einer Beleuchtungsstärke von 81 kLux hinter einem Filter aus 6 mm dickem Fensterglas bis 10 $kJ/cm^2$ bestrahlt. Anschliessend wird erneut die Farbdichte gemessen, um den prozentualen Verlust an Farbdichte zu ermitteln.

Die Ergebnisse sind in der nachfolgenden Tabelle zusammengefasst. Niedrigere Werte bedeuten höhere Lichtechtheit.

| UV-Absorber | Farbdichteverlust nach Belichtung von 10kJ/$cm^2$ | |
|---|---|---|
| | C.I. Acid Yellow 23 | C.I. Acid Red 35 |
| Keiner | 51 % | 81 % |
| 3 % E-1 | 41 % | 66 % |
| 3 % E-2 | 39 % | 63 % |

Beispiel 2: Probedrucke werden analog Beispiel 1 mit dem Farbstoff C.I. Food Black 2 und dem UV-Absorber E-1 bereitet. Die Proben werden wie in Beispiel 1 belichtet (jedoch nur bis 5 $kJ/cm^2$) und der dabei eintretende Farbdichteverlust gemessen.

| UV-Absorber | Farbdichteverlust nach Belichtung von 5 $kJ/cm^2$ |
|---|---|
| Keiner | 15 % |
| 3 % E-1 | 11 % |

Beispiel 3: Probedrucke werden analog Beispiel 1 mit dem Farstoff C.I. Direct Blue 199 und dem UV-Absorber E-1 bereitet. Die Drucke werden mit 45 $kJ/cm^2$ belichtet und der dabei eintretende Farbdichteverlust gemessen.

| UV-Absorber | Farbdichteverlust nach Belichtung von 45 $kJ/cm^2$ |
|---|---|
| Keiner | 18 % |
| 3 % E-1 | 11 % |

Beispiel 4: Eine Beschichtungsmasse aus Silika und Polyvinylalkohol wird hergestellt mit und ohne wasserlösliche UV-Absorber der Formel I.

16,36 g einer 10%-igen wässrigen Lösung von Polyvinylalkohol (Typ 244, Riedel de Haën), 0,15 g einer 10%-igen wässrigen Lösung von Invadin® JFC (CIBA-GEIGY) und 10,51 g Wasser wurden zusammengegeben und gerührt. Anschliessend wurden 2,0 g Silica (Syloid Typ 244, W.R. Grace) zugegeben und mittels Ultraschall dispergiert. Die so hergestellte Giesslösung wurde durch ein Polyesterfilter (mesh 24 µm) filtriert und der pH-Wert mit Lithiumhydroxid auf 7,0 gestellt. Die Giesslösung wurde dann auf einen photographischen Papierträger vergossen und mit einer Spirale zu einer Schicht von 60 µm Dicke verteilt. Nach dem Trocknen mit warmer Luft hatte der Guss ein Trockengewicht von etwa 8 $g/m^2$.

Aehnliche Güsse eines Trockengiessgewichts von insgesamt 8 $g/m^2$, die 1 $g/m^2$ eines wasserlöslichen UV-Absorbers der Formel I enthielten, wurden nach der oben beschriebenen Methode hergestellt. Es wurden jedoch 14,12 g Wasser und 0,52 g UV-Absorber E-1 bzw. E-2 eingesetzt. Der UV-Absorber wurde direkt in der Polyvinylalkohol/Invadin-Mischung gelöst

Als Vergleich wurde ein Tintenstrahldruckaufzeichnungsmaterial mit einem Giessgewicht von 8 $g/m^2$ hergestellt, das 1 g einer emulgierbaren UV-Absorbermischung enthielt. Die Mischung bestand aus 50 % β-[3-(2-H-benztriazol-2-yl)-4-hydroxy-5-tert.butylphenyl]propionsäurepolyäthylenglykol(300)ester, 38 % bis-{β-[3-(2-H-benztriazol-2-yl)-4-hydroxy-5-tert.butylphenyl]-propionsäure}-polyäthylenglykol(300)ester und 12 %

Polyäthylenglykol 300. Ein Emulgator, Katemul IG-70 (Scher Chemicals) wurde verwendet, um die flüssige UV-Absorbermischung zu emulgieren, wie dies in Research Disclosure 295115 (November 1988) beschrieben ist. 16,36 g einer 10%-igen wässrigen Polyvinylalkohollösung, 0,23 g Katemul IG-70 und 15,06 g Wasser wurden zusammen gerührt und 0,54 g der UV-Absorbermischung zugegeben und schliesslich mittels Ultraschall emulgiert. 2,0 g Silika wurden dann hinzugefügt und dispergiert, wiederum mittels Ultraschall.

Die Giesslösung wurde dann neutralisiert und filtriert und zur Herstellung von Tintenstrahldruckaufzeichnungsmaterial wie oben beschrieben verwendet.

Eine Tinte für den Tintenstrahldruck wurde aus 2,5 g C.I. Acid Yellow 17 gelöst in 48,75 g Wasser und 48,75 g Diäthylenglykol hergestellt. Die Tinte wurde dann auf das oben hergestellte Aufzeichnungsmaterial in der in Beispiel 1 beschriebenen Weise aufgedruckt. Die Lichtechtheit der Drucke wurde analog ermittelt.

Nach Bestrahlung mit einer Gesamtenergie von 5 $kJ/cm^2$ ermittelte man einen Farbdichteverlust für die Probe ohne UV-Absorber von 70 %. Im Gegensatz dazu zeigten die Proben mit den UV-Absorbern E-1 bzw. E-2 einen Farbdichteverlust von nur 23 bzw. 30 %. Der Farbdichteverlust für die Probe mit den emulgierbaren UV-Absorbern betrug sogar 91 %. Damit ist gesagt, dass unter diesen Testbedingungen die erfindungsgemässen UV-Absorber eine vorteilhafte Wirkung auf die Lichtechtheit ausüben, wogegen für die Vergleichs-UV-Absorber das Gegenteil zutrifft.

Beispiel 5: Das Aufzeichnungsmaterial nach Beispiel 4, das keinen UV-Absorber bzw. die UV-Absorber E-1 bzw. E-2 enthielt, wurde mit Tintenstrahldrucktinten bedruckt, die verschiedene Farbstoffe enthielten, und auf Lichtbeständigkeit geprüft. Statt C.I. Acid Yellow 17 wurden die Farbstoffe C.I. Acid Red 14, C.I. Acid Red 249 und C.I. Direct Red 227 verwendet, um Tinten wie in Beispiel 4 beschrieben, herzustellen. Die Ergebnisse nach einer Bestrahlung mit einer Gesamtenergie von 10 $kJ/cm^2$ lauteten wie folgt:

| UV-Absorber | Farbdichteverlust (%) | | |
|---|---|---|---|
| | Acid Red 14 | Acid Red 249 | Acid Red 227 |
| Keiner | 61 | 41 | 53 |
| E-1 | 29 | 27 | 33 |
| E-2 | 36 | 27 | 41 |

**Patentansprüche**

1. Wässrige Tinten, enthaltend als Lichtschutzmittel mindestens eine Verbindung der Formel I,

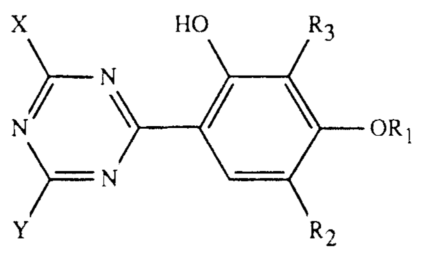

I

worin $R_1$ Wasserstoff, $C_1$-$C_4$-Alkyl, eine Gruppe $-R_4-SO_3M$ oder $-R_4-CO_2M$ bedeutet,
$R_2$, wenn $R_1$ H oder $C_1$-$C_4$-Alkyl ist, eine Gruppe $-SO_3M$ bedeutet, und wenn $R_1$ $-R_4-CO_2M$ oder $-R_4-SO_3M$ ist, H oder $-SO_3M$ bedeutet,
$R_3$ Wasserstoff, Cl oder $C_1$-$C_4$-Alkyl bedeutet,
$R_4$ unsubstituiertes oder durch OH substituiertes $C_1$-$C_4$-Alkylen bedeutet,
X und Y unabhängig voneinander eine Gruppe der Formel II oder III bedeuten,

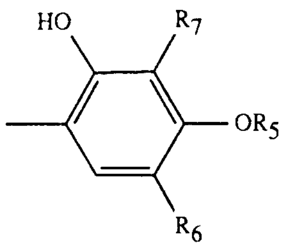 II 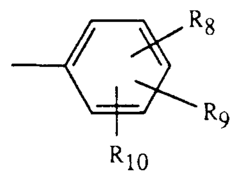 III

worin $R_5$ Wasserstoff, $C_1$-$C_4$-Alkyl, -$R_4$-$CO_2M$ oder -$R_4$-$SO_3M$ bedeutet,
$R_6$ Wasserstoff, Cl, $C_1$-$C_4$-Alkyl oder -$SO_3M$ bedeutet,
$R_7$ Wasserstoff, Cl oder $C_1$-$C_4$-Alkyl bedeutet,
$R_8$, $R_9$ und $R_{10}$ unabhängig voneinander H, Cl, $C_1$-$C_4$-Alkyl, Phenyl oder -$SO_3M$ bedeuten und
M Wasserstoff, Li, Na, K, $\frac{1}{2}$ Ca, $\frac{1}{2}$ Mg, $\frac{1}{2}$ Zn, $\frac{1}{2}$ Co(II), $\frac{1}{2}$ Cu(II), $\frac{1}{2}$ Ni(II), $\frac{1}{3}$ Cr(III), $\frac{1}{3}$ Fe(III),

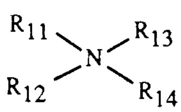 , 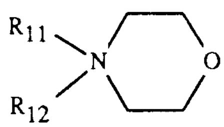 oder $\frac{1}{2}$ 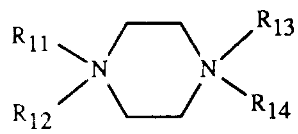

bedeutet, worin
$R_{11}$, $R_{12}$, $R_{13}$ und $R_{14}$ unabhängig voneinander H, $C_1$-$C_{12}$-Alkyl, 2-Hydroxyethyl, Cyclohexyl, Phenyl oder Benzyl bedeuten.

**2.** Wässrige Tinte gemäss Anspruch 1, enthaltend mindestens eine Verbindung der Formel I, worin entweder
a) $R_1$ Wasserstoff, Methyl oder Ethyl ist und $R_2$ -$SO_3M$ bedeutet, oder
b) $R_1$ -$R_4$-$SO_3M$ oder -$R_4$-$CO_2M$ bedeutet und $R_2$ Wasserstoff ist,
$R_3$ Wasserstoff, Cl oder Methyl bedeutet,
$R_4$ unsubstituiertes oder durch OH substituiertes $C_1$-$C_3$-Alkylen bedeutet,
X und Y unabhängig voneinander eine Gruppe der Formel II oder III bedeuten, worin
$R_5$ Wassertoff, Methyl, Ethyl, -$R_4$-$CO_2M$ oder -$R_4$-$SO_3M$ bedeutet,
$R_6$ Wasserstoff oder -$SO_3M$ bedeutet,
$R_7$ Wasserstoff, Cl oder Methyl bedeutet,
$R_8$ Wasserstoff ist,
$R_9$ und $R_{10}$ unabhängig voneinander H, Cl, Methyl, Ethyl oder -$SO_3M$ bedeuten,
M Wasserstoff, Li, Na, K, $\frac{1}{2}$ Ni(II) oder

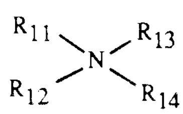

bedeutet und $R_{11}$, $R_{12}$, $R_{13}$ und
$R_{14}$ unabhängig voneinander H, Methyl, Ethyl oder 2-Hydroxyethyl bedeuten.

**3.** Wässrige Tinte, enthaltend als Lichtschutzmittel mindestens eine Verbindung der Formel I, worin entweder
a) $R_1$ Wasserstoff oder Methyl ist und $R_2$ -$SO_3M$ ist oder
b) $R_1$ -$R_4$-$SO_3M$ oder -$R_4$-$CO_2M$ ist und $R_2$ Wasserstoff ist,
$R_3$ Wasserstoff ist,
$R_4$ unsbustituiertes oder durch OH substituiertes $C_1$-$C_3$-Alkylen ist,
X und Y unabhängig voneinander eine Gruppe der Formel II oder III sind, worin $R_5$ dieselbe Bedeutung wie $R_1$ hat, $R_6$ dieselbe Bedeutung wie $R_2$ hat, $R_7$ Wasserstoff ist,
$R_8$ Wasserstoff ist, $R_9$ Wasserstoff oder Methyl ist und $R_{10}$ H, Methyl oder -$SO_3M$ bedeutet,

M Wasserstoff, Li, Na, K, $\frac{1}{2}$ Ni(II) oder

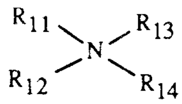

bedeutet und
$R_{11}$, $R_{12}$, $R_{13}$ und $R_{14}$ unabhängig voneinander H, Methyl, Ethyl oder 2-Hydroxyethyl bedeuten.

**4.** Wässrige Tinte gemäss Anspruch 1, enthaltend 0,01 bis 20 Gew.-% mindestens einer Verbindung der Formel I.

**5.** Wässrige Tinte gemäss Anspruch 1, enthaltend 0,1 bis 10 Gew.-% mindestens einer Verbindung der Formel I.

**6.** Tinte gemäss Anspruch 1, enthaltend mindestens 30 Gew.-% Wasser.

**7.** Verwendung einer Tinte gemäss Anspruch 1 für den Tintenstrahldruck.

**8.** Verwendung von Verbindungen der Formell I gemäss Definition in Anspruch 1 als Lichtschutztmittel für wässrige Tinten.

**9.** Aufzeichnungsmaterial für das Tintenstrahldruckverfahren, das mindestens eine Verbindung der Formel I enthält.

**Claims**

**1.** An aqueous ink comprising, as light stabiliser, at least one compound of the formula I

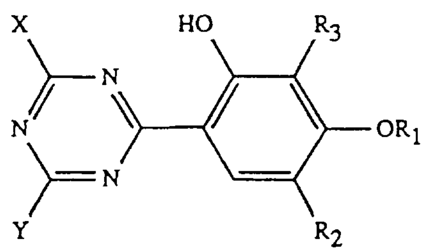
I

in which $R_1$ is hydrogen, $C_1$-$C_4$alkyl, a group -$R_4$-$SO_3M$ or -$R_4$-$CO_2M$,
$R_2$, if $R_1$ is H or $C_1$-$C_4$alkyl, is a group -$SO_3M$ and, if $R_1$ is -$R_4$-$CO_2M$ or -$R_4$-$SO_3M$, is H or -$SO_3M$,
$R_3$ is hydrogen, Cl or $C_1$-$C_4$alkyl,
$R_4$ is unsubstituted or OH-substituted $C_1$-$C_4$alkylene,
X and Y are each independently of the other a group of the formula II or III

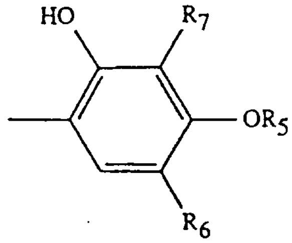
II

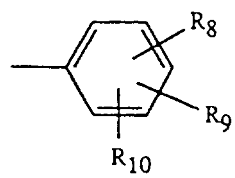
III

in which $R_5$ is hydrogen, $C_1$-$C_4$alkyl, -$R_4$-$CO_2M$ or -$R_4$-$O_3M$,
$R_6$ is hydrogen, Cl, $C_1$-$C_4$alkyl or -$SO_3M$,
$R_7$ is hydrogen, Cl or $C_1$-$C_4$alkyl,
$R_8$, $R_9$ and $R_{10}$ are each independently of one another H, Cl, $C_1$-$C_4$alkyl, phenyl or -$SO_3M$, and
M is hydrogen, Li, Na, K, $\frac{1}{2}$ Ca, $\frac{1}{2}$ Mg, $\frac{1}{2}$ Zn, $\frac{1}{2}$ Co (II), $\frac{1}{2}$ Cu (III), $\frac{1}{2}$ Ni (II), $\frac{1}{3}$ Cr (III), $\frac{1}{3}$ Fe (III),

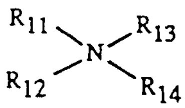 , 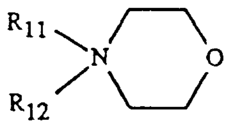 or $\frac{1}{2}$ 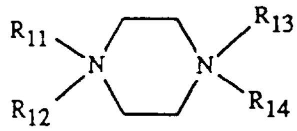

in which
$R_{11}$, $R_{12}$, $R_{13}$ and $R_{14}$ are each independently of one another H, $C_1$-$C_{12}$alkyl, 2-hydroxyethyl, cyclohexyl, phenyl or benzyl.

**2.** An aqueous ink according to claim 1, comprising at least one compound of the formula I, in which either
a) $R_1$ is hydrogen, methyl or ethyl and $R_2$ is -$SO_3M$, or
b) $R_1$ is -$R_4$-$SO_3M$ or -$R_4$-$CO_2M$ and $R_2$ is hydrogen,
$R_3$ is hydrogen, Cl or methyl,
$R_4$ is unsubstituted or OH-substituted $C_1$-$C_3$alkylene,
X and Y are each independently of the other a group of the formula II or III, in which
$R_5$ is hydrogen, methyl, ethyl, -$R_4$-$CO_2M$ or -$R_4$-$SO_3M$,
$R_6$ is hydrogen or -$SO_3M$,
$R_7$ is hydrogen, Cl or methyl,
$R_8$ is hydrogen,
$R_9$ and $R_{10}$ are each independently of the other H, Cl, methyl, ethyl or -$SO_3M$,
M is hydrogen, Li, Na, K, $\frac{1}{2}$ Ni (II) or

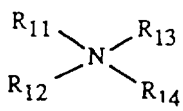 ,

and
$R_{11}$, $R_{12}$, $R_{13}$ and $R_{14}$ are each independently of one another H, methyl, ethyl or 2-hydroxyethyl.

**3.** An aqueous ink comprising, as light stabiliser, at least one compound of the formula I in which either
a) $R_1$ is hydrogen or methyl and $R_2$ is -$SO_3M$, or
b) $R_1$ is -$R_4$-$SO_3M$ or -$R_4$-$CO_2M$ and $R_2$ is hydrogen,
$R_3$ is hydrogen,
$R_4$ is unsubstituted or OH-substituted $C_1$-$C_3$alkylene,
X and Y are each independently of the other a group of the formula II or III, in which $R_5$ has the same meaning as $R_1$, $R_6$ has the same meaning as
$R_2$, $R_7$ is hydrogen,
$R_8$ is hydrogen, $R_9$ is hydrogen or methyl and $R_{10}$ is H, methyl or -$SO_3M$,
M is hydrogen, Li, Na, K, $\frac{1}{2}$ Ni (II) or

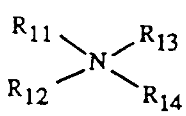 ,

and
$R_{11}$, $R_{12}$, $R_{13}$ and $R_{14}$ are each independently of one another H, methyl, ethyl or 2-hydroxyethyl.

4. An aqueous ink according to claim 1, comprising 0.01 to 20% by weight of at least one compound of the formula I.

5. An aqueous ink according to claim 1, comprising 0.1 to 10% by weight of at least one compound of the formula I.

6. An ink according to claim 1, comprising at least 30% by weight of water.

7. Use of an ink according to claim 1 for ink-jet printing.

8. Use of a compound of the formula I as defined in claim 1 as light stabiliser for aqueous inks.

9. A recording material for the ink-jet printing process, which comprises at least one compound of the formula I.

**Revendications**

1. Encres aqueuses, contenant à titre d'agent de protetection contre les effets de la lumière, au moins un composé de formule I :

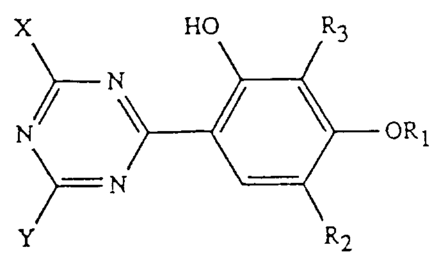

I

dans laquelle $R_1$ représente un atome d'hydrogène, un groupe alkyle en $C_1$ à $C_4$, un groupe $-R_4-SO_3M$ ou $-R_4-CO_2M$,
$R_2$, lorsque $R_1$ représente H ou un groupe alkyle en $C_1$ à $C_4$, représente un groupe $-SO_3M$ et, lorsque $R_1$ représente $-R_4-CO_2M$ ou que $R_4$ représente $-SO_3M$, $R_2$ représente H ou $-SO_3M$,
$R_3$ représente un atome d'hydrogène, Cl ou un groupe en $C_1$ à $C_4$,
$R_4$ représente un groupe alkylène en $C_1$ à $C_4$, non substitué ou substitué par OH, X et Y représente chacun, indépendamment l'un de l'autre, un groupe répondant à la formule II ou à la formule III

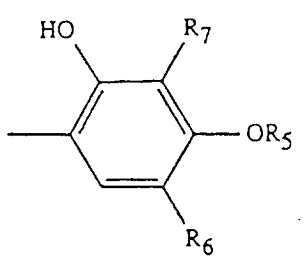

II .

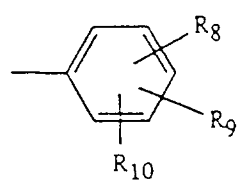

III

dans lesquelles $R_5$ représente un atome d'hydrogène, un groupe alkyle en $C_1$ à $C_4$, $-R_4-CO_2M$ ou $R_4-SO_3M$,
$R_6$ représente un atome d'hydrogène, Cl, un groupe alkyle en $C_1$ à $C_4$ ou $-SO_3M$,
$R_7$ représente un atome d'hydrogène, Cl ou un groupe alkyle en $C_1$ à $C_4$,
$R_8$, $R_9$ et $R_{10}$ représentent chacun, indépendamment l'un de l'autre, H , Cl, un groupe alkyle en $C_1$ à $C_4$, phényle ou $SO_3M$, et
M représente un atome d'hydrogène, Li, Na, K, 1/2 de Ca, 1/2 de Mg, 1/2 de Zn, 1/2 de Co(II), 1/2 Cu-(II), 1/2 de Ni (Ii), 1/3 de Cr (III), 1/3 de Fe(III),

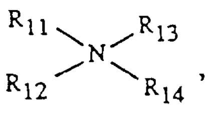 , 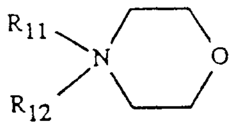 ou 1/2 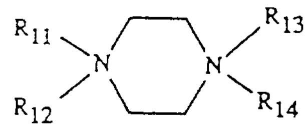

et,

$R_{11}$, $R_{12}$, $R_{13}$ et $R_{14}$ représentent chacun, indépendamment l'un de l'autre, H, un groupe alkyle en $C_1$ à $C_{12}$, 2-hydroxyéthyle, cyclohexyle, phényle ou benzyle.

**2.** Encres aqueuses selon la revendication 1 contenant au moins un composé de formule I, dans laquelle

(a) $R_1$ représente un atome d'hydrogène, un groupe méthyle ou éthyle et $R_2$ représente $-SO_3M$, ou bien

(b) $R_1$ représente un groupe $-R_4-SO_3M$ ou $-R_4-CO_2M$ et $R_2$ représente un atome d'hydrogène,

$R_3$ représente un atome d'hydrogène, Cl ou un groupe méthyle,

$R_4$ représente un groupe alkylène en $C_1$ à $C_3$, non substitué ou substitué par OH,

X et Y représentent chacun, indépendamment l'un de l'autre, un groupe de formule II ou III dans lesquelles

$R_5$ représnte un atome d'hydrogène, un groupe méthyle, éthyle, $-R_4-CO_2M$ ou $-R_4SO_3M$,

$R_6$ représnete un atome d'hydrogène ou un groupe $-SO_3M$,

$R_7$ représente un atome d'hydrogène, Cl ou un groupe méthyle,

$R_8$ représente un atome d'hydrogène,

$R_9$ et $R_{10}$ représente chacun, indépendamment l'un de l'autre,

H, Cl, un groupe méthyle ou éthyle ou $-SO_3M$,

M représente un atome d'hydrogène, Li, Na, K, 1/2 de Ni (II) ou

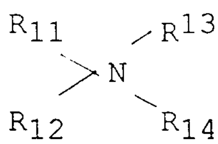

et $R_{11}$, $R_{12}$, $R_{13}$, et $R_{14}$ représentent chacun, indépendamment l'un de l'autre, H, un groupe méthyle, éthyle, ou 2-hydroxyéthyle.

**3.** Encres aqueuses, Contenant comme agent de protection contre les effets de la lumière au moins un composé de formule I, dans laquelle

a) $R_1$ représente un atome d'hydrogène ou un groupe méthyle et $R_2$ représente un groupe $-SO_3M$, ou bien

b) $R_1$ représente un groupe $-R_4-SO_3M$ ou $-R_4-CO_2M$ et $R_2$ représente un atome d'hydrogène,

$R_3$ représente un atome d'hydrogène,

$R_4$ représente un groupe alkylène en $C_1$ à $C_3$, non substitué ou substitué par OH,

X et Y représentent chacun, indépendamment l'un de l'autre, un groupe de formule II ou III, dans lesquelles $R_5$ a le même sens que $R_1$, $R_6$ a le même sens que $R_2$, $R_7$ représente un atome d'hydrogène, $R_8$ représente un atome d'hydrogène, $R_9$ représente un atome d'hydrogène ou un groupe méthyle et $R_{10}$ représente un groupe méthyle et $-SO_3M$,

M représente un atome d'hydrogène, Li, Na, K, 1/2 de Ni(II) ou

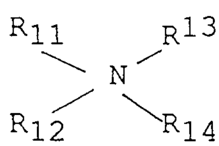

et,
$R_{11}$, $R_{12}$, $R_{13}$ et $R_{14}$ représentent chacun, indépendamment l'un de l'autre, H, un groupe méthyle, éthyle, ou 2-hydroxyéthyle.

**4.** Encres aqueuses selon la revendication 1, contenant 0,01 à 20 % en poids d'au moins un composé de formule I

**5.** Encres aqueuses selon la revendication 1, contenant 0,1 à 10 % en poids d'au moins un composé de formule I.

**6.** Encres selon la revendication 1, contenant au moins 30 % en poids d'eau.

**7.** Utilisation d'une encre selon la revendication 1 pour l'impression par jet d'encre.

**8.** Utilisation de composés de formule 1 selon la définition donnée à la revendication 1, à titre d'agent de protection des encres aqueuses contre les effets de la lumière.

**9.** Matériau-support d'enregistrement pour un procédé d'impression par jet d'encre, ce matériau-support contenant au moins un composé de formule I.